# EUROPEAN PATENT SPECIFICATION

(11) **EP 0 632 216 B1**
(45) Date of publication and mention of the grant of the patent: **21.01.1998**
(21) Application number: 94109801.4
(22) Date of filing: 24.06.1994
(51) Int. Cl.: F16H 37/04, F16H 63/30

(54) **Automatic transmission**
Automatisches Getriebe
Transmission automatique

(30) Priority: 30.06.1993 JP 187432/93
(43) Date of publication of application: 04.01.1995
(73) Proprietor: AISIN AW CO., LTD., Anjo-shi Aichi-ken 444-11 (JP)
(72) Inventor: Taniguchi, Takao, Okazaki-shi, Aichi-ken (JP); Tsukamoto, Kazumasa, Toyota-shi, Aichi-ken (JP); Hayabuchi, Masahiro, Anjo-shi, Aichi-ken (JP); Nishida, Masaaki, Anjo-shi, Aichi-ken (JP); Kasuya, Satoru, Hekinan-shi, Aichi-ken (JP); Sugiura, Nobutada, Nishio-shi, Aichi-ken (JP)
(74) Representative: VOSSIUS & PARTNER

(56) References cited:
- DE-A- 4 230 462
- FR-A- 2 191 672
- US-A- 4 624 154
- US-A- 4 722 242
- US-A- 4 914 978

## Description

The present invention relates to an automatic transmission having a planetary gear especially suitable if applied to an FF (i.e., Front-engine Front drive type) automobile and, more particularly, to a five-speed automatic transmission which is enabled to construct a four-speed automatic transmission by a slight change.

In an automatic transmission, generally speaking, an auxiliary transmission mechanism having one planetary gear is added to a main transmission mechanism having two planetary gears to establish four forward speeds and one rear speed. The application of this automatic transmission to the FF automobile is exemplified by our U.S.P. No. 4,722,242 proposing a four-speed automatic transmission, in which a first shaft is arranged with a three-speed automatic transmission mechanism having a combination of two planetary gears as the main transmission mechanism whereas a second shaft is arranged with an under drive (UD) mechanism having one planetary gear as the auxiliary transmission mechanism.

Incidentally, in recent years there has been a demand for an automatic transmission having an increased number of forward speeds, such as five, to improve mileage and running performance. Therefore, we have proposed an automatic transmission in which the first shaft is arranged with a main transmission mechanism having a combination of a single planetary gear and a dual planetary gear whereas the second shaft is arranged with a Simpson type auxiliary transmission mechanism, as disclosed in U.S.P. No. 4,914, 978. Thus, the main transmission mechanism can establish three or four forward speeds by a slight change and, combined with a three-speed auxiliary transmission mechanism, establish five or six forward speeds in the entire automatic transmission (as will be called the "multi-speed" automatic transmission A).

Generally the automatic transmission can be classified into remarkably many kinds so as to correspond to various kinds of vehicle and various needs. It would lead to a drastic increase in the production cost to manufacture such various kinds of automatic transmissions with correspondingly different parts and on correspondingly different assembly lines. Hence, it is an important target of the automatic transmission to harmonize the various parts and the various assembly lines. It is not exceptional to the target to change the four-speed automatic transmission into a five-speed one.

In the aforementioned multi-speed automatic transmission A, however, the auxiliary transmission mechanism has its two planetary gears connected by a connecting member and is arranged at its rear portion (opposed to the engine side) with a 2nd-speed brake and a 3rd-speed clutch therefor. As a result, the number of parts to be shared with the four-speed automatic transmission equipped with the auxiliary transmission mechanism having one planetary gear is so reduced that the brakes, clutches and so on have to be changed into different arrangements and connections between the four- and five-speed automatic transmissions thereby having to change the existing assembly lines drastically. Thus, the multi-speed automatic transmission A has to solve serious problems such as the high production cost before it is put into practice.

In case the automatic transmission is given more speeds, moreover, a wider range of gear ratios can be set to provide an advantage that a higher torque can be achieved at lower-speed gear stages to improve the accelerating performance of the vehicle. On the other hand, the frictional engagement elements to be applied at the lower speeds are exposed to higher loads so that their durability has to be improved. The frictional engagement elements to be adopted in this case are desirably exemplified by multi-disc engagement elements having higher torque capacities. However, the multi-disc engagement elements have to be used with many frictional members and hydraulic servos acting in the axial direction. Thus, the multi-disc engagement elements form a cause for increasing the axial size of the automatic transmission so that they are not always advantageous for the FF automatic transmission which is limited in the axial size.

In the auxiliary transmission mechanism of the aforementioned multi-speed automatic transmission A, band brakes are used as the frictional engagement elements to be applied at a lower-speed gear stage for the 1st speed or reverse so as to suppress the increase in the axial size. With a view to increasing the torque capacity, however, the band brakes have larger lengths than those of other band brakes. Thus, the structure fails to suffice the intrinsic purpose of the band brakes to suppress the increase in the axial size.

Therefore, there is proposed a multi-speed automatic transmission (as will be called the "multi-speed automatic transmission B"), in which the second shaft is arranged with the Simpson type auxiliary transmission mechanism having multi-disc brakes, as disclosed in U.S.P. No. 4,624,154. In this multi-speed automatic transmission B, the frictional engagement elements to be applied at a higher-speed gear stage having a lower load are exemplified by the band brakes, whereas the frictional engagement elements to be applied at a lower-speed gear stage having a lower load are exemplified by the multi-disc brakes having higher torque capacities.

In the aforementioned multi-speed automatic transmission B, however, the auxiliary transmission mechanism has its axial size increased because it is equipped with hydraulic servos for applying and releasing the multi-disc brakes, as described above. At the same time, the parts are not shared yet with the four-speed automatic transmission, as in the foregoing multi-speed automatic transmission A, because the two planetary gears are connected by the connecting member and arranged at their back (opposed to the engine side) with the multi-disc brakes and the direct drive clutches. Before practice, therefore, there are left unsolved serious problems such as the feasible mount on the vehicle or the remarkably high cost.

US-4 914 978 discloses an automatic transmission. It comprises a fluid coupling and a main transmission mechanism arranged coaxially with each other on a first shaft and an auxiliary transmission mechanism arranged on a second shaft parallel to the first shaft comprising first and second planetary gears and a plurality of frictional engagement elements, a housing to accommodate the fluid coupling, a casing jointed to said housing to accommodate the main transmission mechanism and the auxiliary transmission mechanism and a rear cover jointed to the casing to form an integral casing together with the housing and the casing. The second planetary gear is arranged at the opposite of the rear cover in the axial direction of a multi-disc clutch and a hydraulic servo for the multi-disc clutch. A second-speed multi-disc brake and hydraulic servo for the brake are arranged at the side of the rear cover in the axial direction of the multi-disc clutch and the hydraulic servo for the clutch and the rear cover forms a part of the hydraulic servo for the second-speed multi-disc brake.

Therefore, an object of the present invention is to solve the problems specified above and to provide a five-speed automatic transmission in which an auxiliary transmission mechanism to be arranged on the second shaft can be given a compact three-speed structure to retain the feasible mount on a vehicle although it uses multi-disc brakes having large torque capacities and which can have its parts easily shared with a four-speed automatic transmission to suppress a serious increase in the production cost.

The object is solved with the features of the claims.

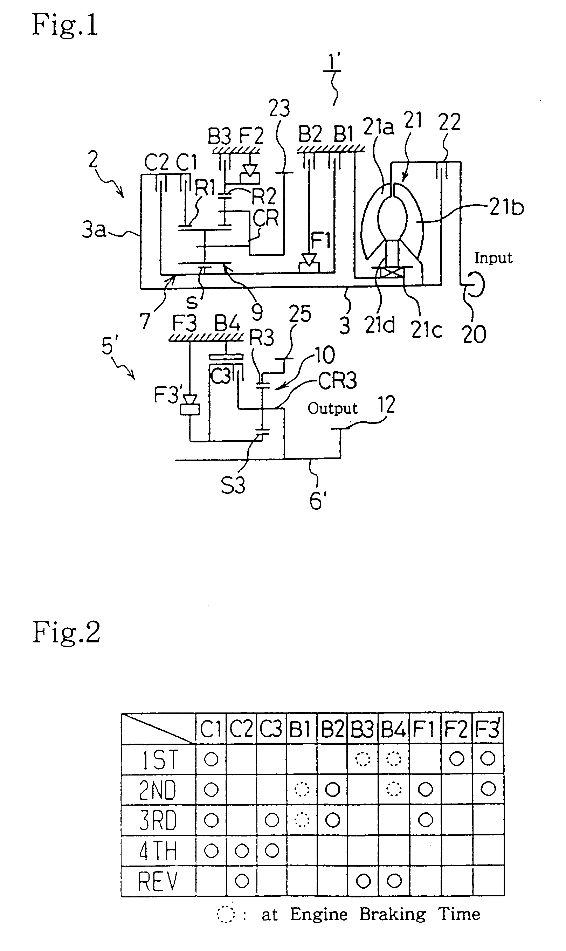

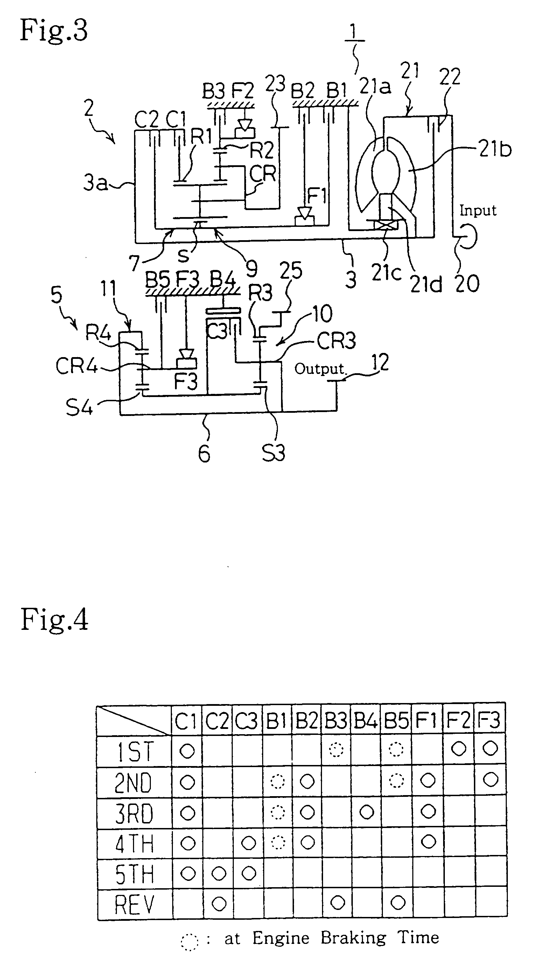

The automatic transmission according to the present invention operates according to the diagram of Fig. 4, for example, to establish five forward speeds and one reverse speed. A four-speed automatic transmission can be constructed by removing the second planetary gear and the lst-speed brake from the auxiliary transmission mechanism of the five-speed automatic transmission. The four-speed automatic transmission operates according to the diagram of Fig. 2, for example, to establish four forward speeds and one reverse speed.

In the automatic transmission according to the present invention, moreover, the auxiliary transmission mechanism arranged on the second shaft has its first planetary gear, 3rd-speed clutch and 2nd-speed brake arranged and connected like the auxiliary transmission mechanism having one planetary gear of the four-speed automatic transmission of the prior art, and the second planetary gear and the 1st-speed brake are added to the back thereof (opposed to the engine) so that gear stages of three forward speeds may be established by applying and releasing the clutch and the two brakes selectively and so that the auxiliary transmission mechanism may be combined with the main transmission mechanism to establish five forward speeds. As a result, a four-speed automatic transmission can be easily constructed merely by removing the second planetary gear and the 1st speed brake. In other words, most of the parts can be shared, and the four- and five-speed automatic transmissions can be produced without any substantial change in the existing assembly lines so that the five-speed automatic transmission can be produced without any increase in the production cost.

Moreover, the auxiliary transmission mechanism has its 2nd-speed brake exemplified by a band brake, its 1st-speed brake exemplified by a multi-disc brake and its hydraulic servo partially formed into the rear cover. The axial size of the auxiliary transmission mechanism can be prevented from exceeding that of the main transmission mechanism while using the multi-disc brake having a high torque capacity as the frictional engagement element to be applied at a lower-speed gear stage under a high load, so that the five-speed automatic transmission can be provided while retaining the feasible mount on the vehicle.
Fig. 1 is a schematic diagram showing a four-speed automatic transmission;
Fig. 2 is a diagram tabulating the operations of the four-speed automatic transmission;
Fig. 3 is a schematic diagram showing a five-speed automatic transmission according to the present invention;
Fig. 4 is a diagram tabulating the operations of the five-speed automatic transmission;
Fig. 5 is a section showing a specific example of the five-speed automatic transmission according to the present invention; and
Fig. 6 is a section for explaining a portion newly added to the five-speed automatic transmission.

First of all. a four-speed automatic transmission will be described with reference to Fig. 1.

The four-speed automatic transmission, as generally designated at 1', is equipped with a first shaft 3 aligned with an engine output shaft 20 and a second shaft 6' arranged in parallel with the first shaft 3. This first shaft 3 is arranged with a torque converter 21 and a main transmission mechanism 2, whereas the second shaft 6' is arranged with an auxiliary transmission mechanism 5'. The torque converter 21 includes: an impeller 21a connected to the engine output shaft 20; a turbine 21b connected to the input shaft 3 of the main transmission mechanism 2 forming the first shaft; and a reactor 21d supported through a one-way clutch 21c, so that the rotations of the engine output shaft 20 are transmitted to the input shaft 3 through either the oil flow in the torque converter 21 or the mechanical coupling by a lock-up clutch 22.

The main transmission mechanism 2 includes a planetary gear unit constructed of a single planetary gear 7 and a dual planetary gear 9. This gear unit has its sun gear S and carrier CR shared between the two planetary gears 7 and 9. Moreover, the input shaft 3 is connected through a forward (or first) clutch C1 to a ring gear R1 of the single planetary gear and through a direct (or second) clutch C2 to a sun gear S, and a counter drive gear 23 forming the output portion of the main transmission mechanism 2 is connected to the carrier CR. The sun gear S is adapted to be braked by a first brake B1 and braked in the forward drive (i.e., engine → wheels) and forward rotational direction through a second brake B2 and a first one-way clutch F1. On the other hand, the dual planetary gear 9 has its ring gear R2 braked by a third brake B3 and braked in the forward drive and forward rotational direction by a second one-way clutch F2.

On the other hand, the auxiliary transmission mechanism 5' includes one (or first) single planetary gear 10. Moreover, a counter driven gear 25 meshing with the aforementioned counter drive gear 23 to provide an input portion for said auxiliary transmission mechanism 5' is connected to a ring gear R3 of said planetary gear 10, and a gear 12 connected to the differential mechanism to provide an output portion is connected to a carrier CR3. Moreover, this carrier CR3 and a sun gear S3 are connected to each other through an under drive (UD) direct (or third) clutch C3, and the sun gear S3 is adapted to be braked by a fourth brake B4 and braked in the forward drive and forward rotational direction by a third one-way clutch F3'.

As described above, the main transmission mechanism 2 establishes three forward speeds and one reverse speed by itself whereas the auxiliary transmission mechanism 5' establishes two under-drive and direct-drive speeds so that the entire automatic transmission 1' operates, as tabulated in Fig. 2, to establish four forward speeds and one reverse speed.

Specifically, in the state of the first (1ST) speed, the forward clutch C1 is applied, and the second and third one-way clutches F2 and F3 are applied to hold the ring gear R2 of the dual planetary gear and the sun gear S3 of the UD planetary gear irrotational. In this state, the rotation of the input shaft 3 is transmitted through the forward clutch C1 to the ring gear R1 of the single planetary gear. At the same time, the ring gear R2 of the dual planetary gear is irrotational so that the common carrier CR is drastically decelerated in the forward direction while rotating the sun gear S idly in the backward direction. This decelerated rotation is transmitted through the counter drive gear 23 and the driven gear 25 to the ring gear R3 of the UD planetary gear. Since, at this time, the sun gear S3 is irrotational, the rotation is further decelerated by the auxiliary transmission mechanism 5' so that the rotation of the 1st speed is outputted from the carrier CR3 to the output gear 12.

In the state of the second (2ND) speed, not only the forward clutch C1 but also the second brake B2 operates, and the operation is switched from the second one-way clutch F2 to the first one-way clutch F1. At the same time, the third one-way clutch F3 is held operative. In this state, the common sun gear S is braked by the second brake B2 and the first one-way clutch F1 so that the rotation of the ring gear R1 of the single planetary gear transmitted from the input shaft 3 to the forward clutch C1 decelerates the carrier CR in the forward direction while rotating the ring gear R2 of the dual planetary gear idly in the forward direction. This decelerated rotation is transmitted through the counter gears 23 and 25 and the auxiliary transmission mechanism 5' in the under drive to the output gear 12 so that the rotation of the 2nd speed is outputted.

In the state of the third (3RD) speed, the forward clutch C1, the second brake B2 and the first one-way clutch F1 are held in their applied states, and the third one-way clutch F3 is released whereas the UD direct clutch C3 is applied. Specifically, the main transmission mechanism 2 is held as it is, and the aforementioned rotation at the 2nd speed is transmitted to the counter driven gear 25. In the auxiliary transmission mechanism 5', moreover, the UD direct clutch C3 is applied to integrate the UD planetary gear 10 so that the rotation of the aforementioned driven gear 25 is outputted as it is from the output gear 12.

In the state of the fourth (4TH) speed, not only the forward clutch C1 and the UD direct clutch C3 but also the direct clutch C2 is applied. In this state, the rotation of the input shaft 3 is transmitted to the ring gear R1 of the single planetary gear and the common sun gear S so that the gear unit composed of the single and dual planetary gears 7 and 9 is rotated together to transmit the direct drive rotation to the counter drive gear 23. Moreover, the auxiliary transmission mechanism 5' is also in the direct drive state so that the direct drive rotation of the gear 23 is outputted as it is from the output gear 12.

In the reverse (REV) state, the direct clutch C2 and the third brake B3 are applied, and the fourth brake B4 is applied. In this state, the rotation of the input shaft 3 is transmitted through the direct clutch C2 to the sun gear S, since, at this time, the ring gear R2 of the dual planetary gear is braked by the third brake B3. As a result, the carrier CR is reversed while the ring gear R1 of the single planetary gear being rotated idly backward. This backward rotation is transmitted through the counter gears 23 and 25 to the ring gear R2 of the dual planetary gear. In the UD planetary gear 10, the sun gear S is braked in the backward direction, too, by the fourth brake B4 so that the rotation of the ring gear R3 is outputted as the decelerated backward rotation from the carrier CR3 to the output gear 12.

Incidentally, the elements, as indicated by broken circles in Fig. 2, are activated when the engine braking is effected. Specifically, in the lst-speed state, the third brake B3 and the fourth brake B4 are applied to hold irrotational the ring gear R2 of the dual planetary gear and the sun gear S3 of the UD planetary gear, which might otherwise idly rotate with the second one-way clutch F2 and the third one-way clutch F3. In the 2nd-speed state, the first brake B1 and the fourth brake B4 are applied to hold irrotational the common sun gear S and the sun gear S3, which might otherwise idly rotate with the first one-way clutch F1 and the third one-way clutch F3'. In the 3rd-speed state, the first brake B1 is applied to hold the common sun gear S irrotational.

Here will be schematically described a five-speed automatic transmission according to the present invention with reference to Fig. 3.

This automatic transmission, as generated designated at 1, is identical to the aforementioned four-speed automatic transmission in its main transmission mechanism 2 but is partially different in the auxiliary transmission mechanism 5. This auxiliary transmission mechanism 5 is identical to the foregoing auxiliary transmission mechanism 5' in the construction of the first single planetary gear 10 and in the UD direct clutch C3 and the fourth brake B4 but is different in the new provision of a second single planetary gear 11 and a fifth brake B5 and in the different applied position of the third one-way clutch F3.

Specifically, the auxiliary transmission mechanism 5 includes such first and second single planetary gears 10 and 11 that the ring gear R3 of the first single planetary gear and a ring gear R4 of the second single planetary gear are connected to each other and that the sun gears S3 and S5 are integrally connected to construct a Simpson type gear train. Like the foregoing auxiliary transmission mechanism 5', the ring gear R3 of the first single planetary gear is connected to the counter driven gear 25 to form an input portion, and the carrier CR3 of the first single planetary gear is connected to the output gear 12. Between the ring gear R3 of the first single planetary gear and the integrated sun gear S3 or S4, there is interposed the UD direct clutch C3. Moreover, the integrated sun gear S3 (or S4) can be braked by the fourth brake B4, and a carrier CR4 of the second single planetary gear can be suitably braked by the third one-way clutch F3 and the fifth brake B5. As a result, the auxiliary transmission mechanism 5 can establish gear stages of forward three speeds.

Here will be described the operations of the present five-speed automatic transmission 1 with reference to the operation diagram tabulated in Fig. 4.

In the state of the first (1ST) speed, the forward clutch C1, the second one-way clutch F2 and the third one-way clutch F3 are applied. As a result, the main transmission mechanism 5 is decelerated as in the lst-speed state of the foregoing automatic transmission so that the decelerated rotation is transmitted through the counter gears 23 and 25 to the ring gear R3 of the UD planetary gear in the auxiliary transmission mechanism 5. This auxiliary transmission mechanism 5 is brought into the lst-speed state because the carrier CR4 of the second single planetary gear is stopped by the third one-way clutch F3, so that the decelerated rotation of the main transmission mechanism 2 is further decelerated by the auxiliary transmission mechanism 5 and outputted from the output gear 12.

In the state of the second (2ND) speed, not only the forward clutch C1 but also the second brake B2 is applied so that the second one-way clutch F2 is smoothly switched to the first one-way clutch F1 to bring the main transmission mechanism 2 into the 2nd-speed state like before. On the other hand, the auxiliary transmission mechanism 5 is given the lst-speed state by the application of the third one-way clutch F3. This 2nd-speed state and the lst-speed state are combined to establish the 2nd speed in the entire automatic transmission 1.

In the state of the third (3RD) speed, the main transmission mechanism 2 is identical to the aforementioned 2nd-speed state in which the forward clutch C1, the second brake B2 and the first one-way clutch F1 are applied, and the auxiliary transmission mechanism 5 has its fourth brake B4 applied. Then, the sun gears S3 and S4 of the second single planetary gear are fixed so that the rotation from the ring gear R3 of the first single planetary gear is outputted as the 2nd-speed rotation from the carrier CR3. As a result, the 2nd speed of the main transmission mechanism 2 and the 2nd speed of the auxiliary transmission mechanism 5 establish the 3rd speed in the entire automatic transmission 1.

In the state of the fourth (4TH) speed, the main transmission mechanism 2 is identical to the aforementioned 2nd-speed and 3rd-speed states, in which the forward clutch C1, the second brake B2 and the first one-way clutch F1 are applied, and the auxiliary transmission mechanism 5 has its fourth brake B4 released but its UD direct clutch C3 applied. In this state, the first single planetary gear has its ring gear R3 and its sun gears S4 and S3 connected to establish the direct drive state, in which the planetary gears 10 and 11 are integrally rotated. As a result, the 2nd speed of the main transmission mechanism 2 and the direct drive (or the 3rd speed) of the auxiliary transmission mechanism 5 are combined so that the entire automatic transmission outputs the 4th-speed rotation from the output gear 12.

In the state of the fifth (5TH) speed, the forward clutch C1 and the direct clutch C2 are applied, and the rotation of the input shaft 3 is transmitted to both the ring gear R1 and the sun gear S of the single planetary gear so that the main transmission mechanism 2 comes into the direct drive state in which the gear unit is integrally rotated. On the other hand, the auxiliary transmission mechanism 5 is in the direct drive state in which the UD direct clutch C3 is applied. As a result, the third speed (i.e., the direct drive) of the main transmission mechanism 2 and the third speed (i.e., the direct drive) of the auxiliary transmission mechanism 5 are combined so that the entire automatic transmission outputs the 5th-speed rotation from the output gear 12.

In the reverse (REV) state, the direct clutch C2 and the third brake B3 are applied, and the fifth brake B5 is applied. In this state, the reverse rotation is extracted like before from the main transmission mechanism 2. On the other hand, the auxiliary transmission mechanism 5 is held in the first-speed state because the carrier CR4 of the second single planetary gear is stopped in the backward direction, too, by the fifth brake B5. As a result, the reverse rotation of the main transmission mechanism 2 and the lst-speed rotation of the auxiliary transmission mechanism 5 are combined to output the decelerated backward rotation from the output gear 12.

In Fig. 4, too, the elements, as indicated by broken circles, are activated at the engine braking time, as in Fig. 2. Specifically, at the 1st speed, the third brake B3 and the fifth brake B5 are applied to fix the ring gear R2 of the dual planetary gear in place of the second one-way clutch F2 and to fix the carrier CR4 of the second single planetary gear in place of the third one-way clutch F3. At the 2nd speed, the first brake B1 and the fifth brake B5 are applied to fix the sun gear S in place of the first one-way clutch F1 and to fix the carrier CR4 of the second single planetary gear in place of the third one-way clutch F3. At the 3rd and 4th speeds, the first brake B1 is applied to fix the sun gear S in place of the first one-way clutch F1.

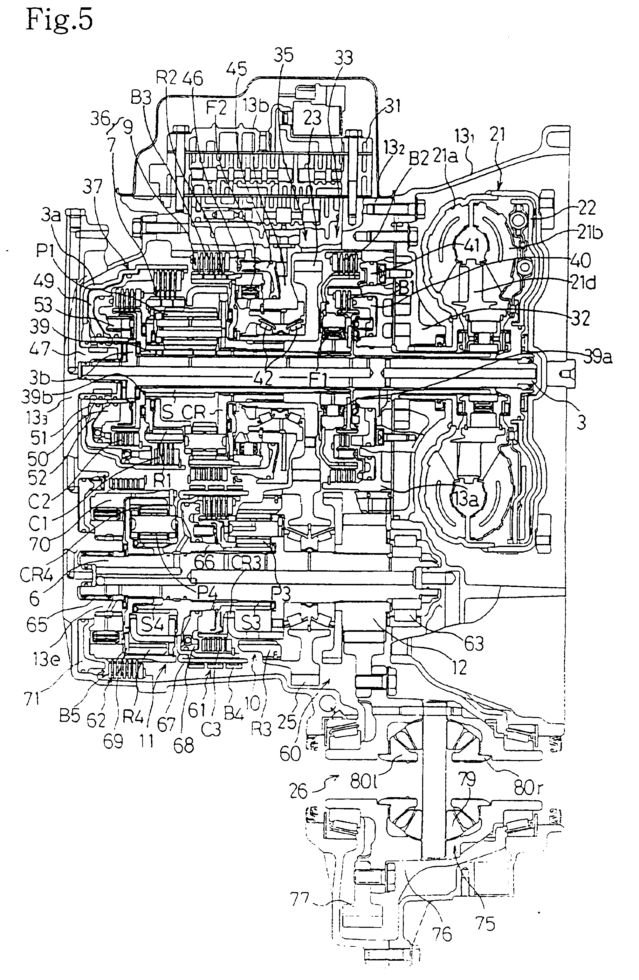

Here will be described a specific example of the five-speed automatic transmission 1 according to the present invention with reference to Fig. 5.

The five-speed automatic transmission 1 is constructed to include the torque converter 21, the three-speed main transmission mechanism 2, the three-speed auxiliary transmission mechanism 5 and a differential 26, and these components are accommodated in an integral casing which is constructed by jointing a transaxle housing 13₁, a transaxle casing 13₂ and a transaxle rear cover 13₃ to one another. Moreover, the torque converter 21 is equipped with not only the impeller 21a, the turbine 21b and the reactor 21d but also the lockup clutch 22 so that it transmits the rotation of the engine clutch shaft to the inside of the main transmission mechanism 2 through either the oil flow in the torque converter 21 or the mechanical coupling by the lockup clutch 22. In those casings 13, moreover, there are rotatably supported the first shaft 3, which is aligned with the crankshaft, and the second shaft 6 which is arranged in parallel with the first shaft 3. Still moreover, a valve body 31 is arranged outside of the casings 13, and an oil pump 32 is interposed between the main transmission mechanism 2 and the torque converter 21.

The main transmission mechanism 2 is arranged with a brake portion 33, an output portion 35, a planetary gear unit portion 36 and a clutch portion 37 consecutively in the recited order in the axial direction to the outside from the oil pump 32. Moreover, a hollow shaft 39 is rotatably supported on the first shaft 3.

The planetary gear unit portion 36 is constructed to include the single planetary gear 7 and the dual planetary gear 9. Of these, the single planetary gear 7 is composed of the sun gear S formed as a long gear on the hollow shaft 39, the ring gear R1, and the carrier CR supporting a pinion P1 as a long pinion meshing with those gears, and the dual planetary gear 9 is composed of the common sun gear S formed on the hollow shaft 39, the ring gear R2, and the common carrier CR causing the pinion P1 meshing as the common pinion with the sun gear S and a pinion P2 meshing with the ring gear R2 to mesh with each other. Incidentally, those two planetary gears 7 and 9 are made common to have their sun gears S formed on the hollow shaft 39. The carriers CR are integrated to act as the common carrier, and the pinion P1 is made as a long pinion.

On the other hand, the brake portion 33 is arranged with the first one-way clutch F1, the first brake B1 and the second brake B2 consecutively in the recited order radially outwards. In the positions adjacent to the individual brakes, there are radially juxtaposed hydraulic servos 40 and 41 which are formed in a casing 13a integrally jointed to the casing of the oil pump 32. The first brake B1 is interposed between the flanged portion 39a at the leading end of the hollow shaft 39 and the flanged portion extending from the pump casing 13a. On the other hand, the second brake B2 is interposed between the flanged portion extending from the outer race of the first one-way clutch F1 and the flanged portion extending from the pump casing 13a. At the same time, the first one-way clutch F1 is arranged between the hollow shaft 39 and the first brake B1.

On the other hand, the output portion 35 is equipped with the counter drive gear 23 which is supported by a bearing 42 on a partition 13b formed in the axle casing 13₂. The drive gear 23 is connected through a spline to the carrier CR. Moreover, the bearing 42 has its outer race portion irrotationally fixed on the partition 13b and extended in the axial direction, and the second one-way clutch F2 is interposed between the extended portion and the joint integrated with the ring gear R2. On the other hand, the third brake B3 is interposed between the outer circumference of the ring gear R2 and the axle casing 13₂. At one side wall of the partition 13b, there is arranged a hydraulic servo 45 which has its piston axially extended into a comb-tooth shape to control the third brake B3. A return spring 46 is arranged at the comb-tooth portion.

On the other hand, the clutch portion 37 is equipped with the forward clutch C1 and the direct clutch C2 and is accommodated in the transaxle rear cover 13₃ which is positioned at the leading end of the main transmission mechanism 2 to form the integral casing. To the leading end portion of the first shaft 3, moreover, there is integrally connected a flanged portion 3a which is fitted on a boss portion 47 formed at the cover 13₃. On the flanged portion 3a, there is fitted a movable member 49, in which is fitted a piston member 50. Moreover, the movable member 49 forms an oil chamber 51 between its radially inner portion and the flanged portion 3a and has its radially outer portion connected to block only the rotation relative to the flanged portion 3a and opposed at a small clearance to the forward clutch C1 to constitute a hydraulic servo for the forward clutch. On the other hand, the piston portion 50 forms an oil chamber 52 between itself and the movable member 49 and opposed at its opposite face to the direct clutch C2 to constitute a hydraulic servo for the direct clutch. Between the piston member 50 and a ring 3b fixed on the first shaft 3, moreover, there is compressed a spring 53 which constitutes a return spring shared between the piston members 49 and 50 of the two hydraulic servos. Still moreover, the forward clutch C1 is interposed between the outer and inner circumference of the flanged portion 3a and the outer circumference of the ring gear R1 of the single planetary gear, whereas the direct clutch C2 is interposed between the inner circumference of the movable member 49 and a flanged portion 39b connected to the leading end of the hollow shaft 39.

On the other hand, the auxiliary transmission mechanism 5 is arranged with a gear portion 60, the first single planetary gear 10, a control portion 61, the second single planetary gear 11 and an additional control portion 62 consecutively in the recited order outward in the axial direction of the second shaft 6. This second shaft 6 is rotatably supported in the casings 13₁ and 13₃ by bearings 63 and 65.

The gear portion 60 is composed of the differential drive pinion (or the output gear) 12 splined to the second shaft 6 for transmitting the rotation to the differential portion 26, and the counter driven gear 25 rotatably supported on the shaft 6 through a bearing and meshing with the aforementioned counter drive gear 23.

The first single planetary gear 10 has its ring gear R3 connected to the counter driven gear 25, and a sleeve 66 formed with the sun gear S3 is rotatably supported by the second shaft 6. Moreover, a pinion P3 is supported by the carrier CR3 which has a flange formed integrally with the second shaft 6, and the carrier CR3 supporting the other end of the pinion P3 is connected to the inner hub of the UD direct clutch C3.

The control portion 61 is arranged around its circumference with the fourth brake B4 made as a band brake, which has its drum 67 arranged an its radially inner side with the UD direct clutch C3. Moreover, the aforementioned sun gear sleeve 66 is equipped with a hydraulic servo 68 for the direct clutch C3 and has the outer hub of the drum 67 and the clutch C3 integrally fixed.

Moreover, the second single planetary gear 11 has its sun gear S4 formed on the aforementioned sleeve 66 and its ring gear R4 connected to a flange 69 which is splined to the second shaft 6. Still moreover, the carrier CR4 supporting a pinion P4 is connected to a drum 70 which is extended outward in the axial direction.

The additional control unit 62 is equipped with the fifth brake B5 and the third one-way clutch F3 in the order from the radially outer side and is so positioned at the outermost end portion of the second shaft that it is accommodated together with the second single planetary gear 11 in the axle rear cover 13₃. Moreover, this rear cover 13₃ is formed in its inner circumference with a spline, and the fifth brake B5 is arranged between the inner circumference and the outer circumference of the aforementioned drum 70. Still moreover, the rear cover 13₃ is formed with a flanged portion 13e for supporting the second shaft 6 to constitute a hydraulic servo 71 for the fifth brake B5, which has an annular piston 71 between said flanged portion and said cylindrical portion. Furthermore, the third one-way clutch F3 is arranged between the flanged portion 13e and the drum 70.

On the other hand, the differential 26 is equipped with a differential gear unit 75 and a ring gear mounting casing 76. This mounting casing 76 fixes a ring gear 77 meshing with the aforementioned differential drive gear 12 and supports a differential pinion 79 of the differential gear unit 75 to constitute a differential carrier. On the other hand, the differential gear unit 75 has lefthand and righthand side gears 80l and 80r meshing with that pinion 79 and coupled to the lefthand and righthand front axles, respectively.

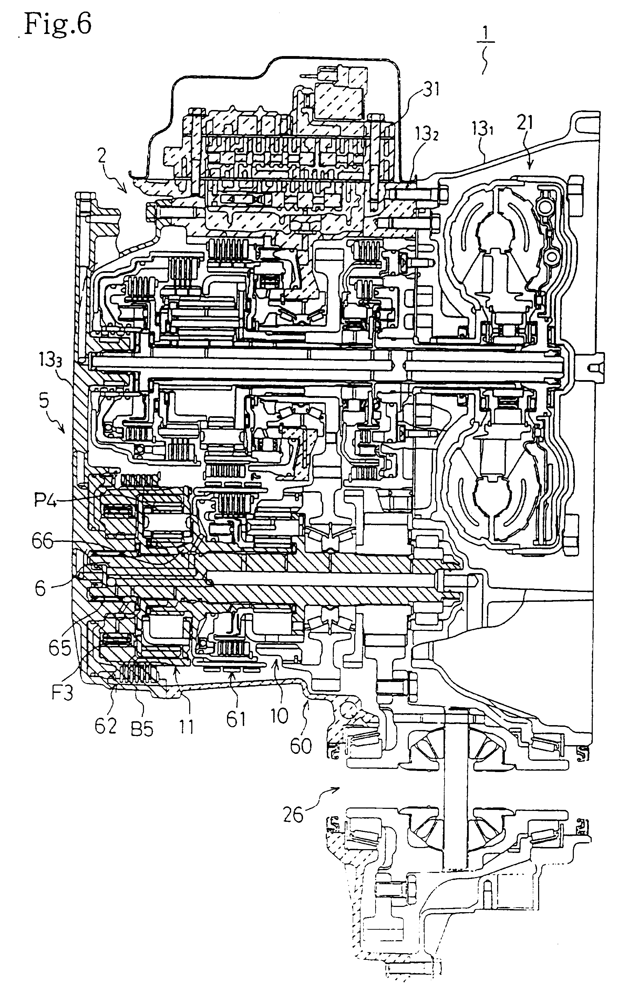

In the aforementioned four-speed automatic transmission 1', as shown in Fig. 6, the portion, as hatched by solid lines, are added as new ones, and the portion, as hatched by broken lines, is a corresponding improved portion to be added to the existing line. Specifically, the transaxle rear cover 13₃, the second shaft 6, the additional control portion 62 (i.e., the fifth brake B5 and the third one-way clutch F3) and the sun gear sleeve 66 are added as the new ones, and the valve body 31 and the transaxle casing 13₂ are added and modified. Incidentally, in the second planetary gear 11, the pinion P4 used is exemplified by an existing part, and the bearing 65 used to support the second shaft is exemplified by an existing part.

As a result, the other portions (i.e., the portions having no hatching in Fig. 6) including the torque converter 21, the main transmission mechanism 2, the transaxle housing 13₁, the differential portion 26, and the first single planetary gear 10, the gear portion 60 and the control portion 61 of the auxiliary transmission mechanism are shared with the four-speed automatic transmission 1'.

With the construction thus far described, according to the present embodiment, the rotation of the engine crankshaft is transmitted through the torque converter 21 or the lockup clutch 22 to the first shaft 3 and is suitably changed in speed by the main transmission mechanism 2 until the speed-changed rotation is transmitted through the counter drive gear 23 and the counter driven gear 25 to the auxiliary transmission mechanism 5. The rotation is further suitably changed in speed by the auxiliary transmission mechanism 5 and is transmitted through the differential 26 to the righthand and lefthand axles. At this time, the individual control elements C1, C2, B1, B2, B3, F1 and F2 of the main transmission mechanism 2, and the individual control elements C3, B4, B5 and F3 of the auxiliary transmission mechanism 5 act, as tabulated in Fig. 4. Incidentally, solid circles appearing in Fig. 4 indicate the active states, in which the brakes are applied to brake, in which the clutches are applied to connect and in which the one-way clutches are applied to engage, whereas the broken circles indicate the active states at a coasting time. Specifically, the 1st speed of the main transmission mechanism 2 and the 1st speed of the auxiliary transmission mechanism 5 are combined to establish the 1st speed in the entire transmission 1, and the 2nd speed of the main transmission mechanism 2 and the 1st speed of the auxiliary transmission mechanism 5 are combined to establish the 2nd speed in the entire transmission 1. Moreover, the 2nd speed of the main transmission mechanism 2 and the 2nd speed of the auxiliary transmission mechanism 5 are combined to establish the 3rd speed as a whole, and the 2nd speed of the main transmission mechanism 2 and the 3rd speed of the auxiliary transmission mechanism 5 are combined to establish the 4th speed as a whole. Still moreover, the 3rd speed of the main transmission mechanism 2 and the 3rd speed of the auxiliary transmission mechanism 5 are combined to establish the 5th speed as a whole.

## Claims

1. An automatic transmission comprising:
**a)** a fluid coupling (21) and a main transmission mechanism (2) arranged coaxially with each other on a first shaft (3), said main transmission mechanism being adapted to establish three forward speeds and one reverse speed and including a planetary gear train (7/9) coupled to said fluid coupling, and an output unit (23/25) connected to said planetary gear train and arranged between said planetary gear train and said fluid coupling;
**b)** an auxiliary transmission mechanism (5) arranged on a second shaft (6) parallel to said first shaft, said auxiliary transmission mechanism being adapted to establish three forward speeds and including an output shaft (12) arranged on said second shaft, first and second planetary gear trains (10, 11) and a plurality of frictional engagement elements (C3, B4, F3, B5);
**c)** a housing (13₁) to accommodate said fluid coupling, a casing (13) jointed to said housing to accommodate said main transmission mechanism and said auxiliary transmission mechanism, and a rear cover (13₃) jointed to said casing to form an integral casing together with said housing and said casing,
**d)** whereby said main transmission mechanism and said auxiliary transmission mechanism are combined to establish five forward speeds and one reverse speed,
**e)** wherein the plurality of frictional engagement elements of said auxiliary transmission mechanism include:
- a multi-disc clutch (C3) and a hydraulic servo for it adapted to be applied at the 3rd speed of said auxiliary transmission mechanism;
- a band brake (B4) adapted to be applied at the 2nd speed of said auxiliary transmission mechanism;
- a multi-disc brake (B5) and a hydraulic servo for it adapted to be applied at the 1st speed of said auxiliary transmission mechanism;
**f)** wherein said first planetary gear train (10) includes:
- a first ring gear (R3) connected to the output unit (23/25) of said main transmission mechanism and acting as an input unit of said auxiliary transmission mechanism;
- a first carrier (CR3) connected to said output shaft; and
- a first sun gear (S3) connectible to said first carrier through said multi-disc clutch and its hydraulic servo,
**g)** wherein said multi-disc clutch (C3) and its hydraulic servo are arranged at the side of said rear cover in the axial direction of said first planetary gear train and connectible to said integral casing through said band brake,
**h)** wherein said band brake (B4) is arranged around the outer circumference of said hydraulic servo for said multi-disc clutch (C3),
**i)** wherein said second planetary gear train (11) includes:
- a second ring gear (R4) arranged at the side of said rear cover in the axial direction of said multi-disc clutch (C3) and its hydraulic servo and connected to said output shaft;
- a second carrier (CR4) connectible to said integral casing through at least a first one-way clutch (F3); and
- a second sun gear (S4) connected to said first sun gear (S3);
**j)** wherein said multi-disc brake (B5) and its hydraulic servo are arranged at the side of said rear cover in the axial direction of said second planetary gear train, and
**k)** wherein said rear cover forms part of said hydraulic servo for said multi-disc brake (B5).

2. An automatic transmission according to claim 1,
- wherein said main transmission mechanism includes: an input shaft (20) coupled to said fluid coupling; wherein said planetary gear train (7/9) includes a third planetary gear train, a dual planetary gear train, and a plurality of frictional engagement elements,
- wherein the plurality of frictional engagement elements of said main transmission mechanism include: a first clutch (C1) adapted to be applied at the 1st speed of said main transmission mechanism; a first brake (B1) adapted to be applied at the 2nd speed of said main transmission mechanism; a second clutch (C2) adapted to be applied at the 3rd speed and at the reverse stage of said main transmission mechanism; and a second brake (B3);
- wherein said third planetary gear train includes: a third ring gear (R1) connectible to said first shaft (3) through said first clutch (C1); a third carrier (CR) connected to said output unit (23, 25); and a third sun gear (S) connectible to said first shaft (3) through said second clutch (C2) and connectible to said integral casing (13) through said first brake (B1), and
- wherein said dual planetary gear train (9) includes: a fourth ring gear (R2) connectible to said integral casing (13) through said second brake (B3); a fourth carrier integrally connected to said third carrier (CR); and a fourth sun gear integrally connected to said third sun gear (S).

3. An automatic transmission according to claim 1 or 2, wherein said first one-way clutch (F3) is adapted to be applied at the 1st speed of said auxiliary transmission mechanism (5), and wherein said first one-way clutch (F3) is arranged between said second planetary gear train (11) and said hydraulic servo for said multi-disc brake (B5).

4. A transmission according to claim 2 or 3, wherein the plurality of frictional engagement elements of said main transmission mechanism (2) further include: said second brake (B3) and a second one-way clutch (F2) adapted to be applied at the 2nd speed of said main transmission mechanism; and a third one-way clutch (F1) adapted to be applied at the 1st speed of said main transmission mechanism, wherein said third sun gear (S) is connectible to said integral casing through said first brake (B1), wherein said second one-way clutch (F2) is interposed between said third sun gear (S) and said first brake (B1), and wherein said fourth ring gear (R2) is connectible to said integral casing (13) through said second one-way clutch.

## Patentansprüche

1. Automatikgetriebe mit:
a) einer Strömungskupplung (21) und einem Hauptgetriebemechanismus (2), die koaxial zueinander auf einer ersten Welle (3) angeordnet sind, wobei der Hauptgetriebemechanismus geeignet ist, drei Vorwärtsgänge und einen Rückwärtsgang zu realisieren, und aufweist: ein Planetengetriebe (7/9), das mit der Strömungskupplung gekoppelt ist, und eine Abtriebseinheit (23/25), die mit dem Planetengetriebe verbunden und zwischen dem Planetengetriebe und der Strömungskupplung angeordnet ist;
b) einem Hilfsgetriebemechanismus (5), der auf einer zweiten Welle (6) parallel zu der ersten Welle angeordnet ist, wobei der Hilfsgetriebemechanismus geeignet ist, drei Vorwärtsgänge zu realisieren, und aufweist: eine Abtriebswelle (12), die auf der zweiten Welle angeordnet ist, ein erstes und zweites Planetengetriebe (10, 11) und mehrere Reibeingriffselemente (C3, B4, F3, B5);
c) einem Mantel (13₁), um die Strömungskupplung unterzubringen, einem Gehäuse (13), das an den Mantel angefügt ist, um den Hauptgetriebemechanismus und den Hilfsgetriebemechanismus unterzubringen, und einem Getriebedeckel (13₃), der an das Gehäuse angefügt ist, um ein integrales Gehäuse zusammen mit dem Mantel und dem Gehäuse zu bilden,
d) wodurch der Hauptgetriebemechanismus und der Hilfsgetriebemechanismus kombiniert werden, um fünf Vorwärtsgänge und einen Rückwärtsgang zu realisieren,
e) wobei die mehreren Reibeingriffselemente des Hilfsgetriebemechanismus aufweisen:
- eine Mehrscheibenkupplung (C3) und ein hydraulisches Servoelement für sie, die geeignet sind, im 3. Gang des Hilfsgetriebemechanismus betätigt zu werden;
- eine Bandbremse (B4), die geeignet ist, im 2. Gang des Hilfsgetriebemechanismus betätigt zu werden;
- eine Mehrscheibenbremse (B5) und ein hydraulisches Servoelement für sie, die geeignet sind, im 1. Gang des Hilfsgetriebemechanismus betätigt zu werden;
f) wobei das erste Planetengetriebe (10) aufweist:
- ein erstes Ringrad (R3), das mit der Abtriebseinheit (23/25) des Hauptgetriebemechanismus verbunden ist und als Antriebseinheit des Hilfsgetriebemechanismus wirkt;
- einen ersten Träger (CR3), der mit der Abtriebswelle verbunden ist; und
- ein erstes Sonnenrad (S3), das mit dem ersten Träger über die Mehrscheibenkupplung und ihr hydraulisches Servoelement verbunden ist,
g) wobei die Mehrscheibenkupplung (C3) und ihr hydraulisches Servoelement auf der Seite des Getriebedeckels in Axialrichtung des ersten Planetengetriebes angeordnet sind und mit dem integralen Gehäuse über die Bandbremse verbunden werden können,
h) wobei die Bandbremse (B4) um den Außenumfang des hydraulischen Servoelements für die Mehrscheibenkupplung (C3) angeordnet ist,
i) wobei das zweite Planetengetriebe (11) aufweist:
- ein zweites Ringrad (R4), das auf der Seite des Getriebedeckels in Axialrichtung der Mehrscheibenkupplung (C3) und ihres hydraulischen Servoelements angeordnet und mit der Abtriebswelle verbunden ist;
- einen zweiten Träger (CR4), der mit dem integralen Gehäuse über mindestens eine erste Freilaufkupplung (F3) verbunden werden kann; und
- ein zweites Sonnenrad (S4), das mit dem ersten Sonnenrad (S3) verbunden ist;
j) wobei die Mehrscheibenbremse (B5) und ihr hydraulisches Servoelement auf der Seite des Getriebedeckels in Axialrichtung des zweiten Planetengetriebes angeordnet sind, und
k) wobei der Getriebedeckel Teil des hydraulischen Servoelements für die Mehrscheibenbremse (B5) bildet.

2. Automatikgetriebe nach Anspruch 1,
- wobei der Hauptgetriebemechanismus aufweist: eine Antriebswelle (20), die mit der Strömungskupplung gekoppelt ist; wobei das Planetengetriebe (7/9) ein drittes Planetengetriebe, ein Doppelplanetengetriebe und mehrere Reibeingriffselemente aufweist,
- wobei die mehreren Reibeingriffselemente des Hauptgetriebemechanismus aufweisen: eine erste Kupplung (C1), die geeignet ist, im 1. Gang des Hauptgetriebemechanismus betätigt zu werden; eine erste Bremse (B1), die geeignet ist, im 2. Gang des Hauptgetriebemechanismus betätigt zu werden; eine zweite Kupplung (C2), die geeignet ist, im 3. Gang und im Rückwärtsgang des Hauptgetriebemechanismus betätigt zu werden; und eine zweite Bremse (B3);
- wobei das dritte Planetengetriebe aufweist: ein drittes Ringrad (R1), das mit der ersten Welle (3) über die erste Kupplung (C1) verbunden werden kann; einen dritten Träger (CR), der mit der Abtriebseinheit (23, 25) verbunden ist; und ein drittes Sonnenrad (S), das mit der ersten Welle (3) über die zweite Kupplung (C2) verbunden werden kann und mit dem integralen Gehäuse (13) über die erste Bremse (B1) verbunden werden kann, und
- wobei das Doppelplanetengetriebe (9) aufweist: ein viertes Ringrad (R2), das mit dem integralen Gehäuse (13) über die zweite Bremse (B3) verbunden werden kann; einen vierten Träger, der in einem Stück mit dem dritten Träger (CR) verbunden ist; und ein viertes Sonnenrad, das in einem Stück mit dem dritten Sonnenrad (S) verbunden ist.

3. Automatikgetriebe nach Anspruch 1 oder 2, wobei die erste Freilaufkupplung (F3) geeignet ist, im 1. Gang des Hilfsgetriebemechanismus (5) betätigt zu werden, und wobei die erste Freilaufkupplung (F3) zwischen dem zweiten Planetengetriebe (11) und dem hydraulischen Servoelement für die Mehrscheibenbremse (B5) angeordnet ist.

4. Getriebe nach Anspruch 2 oder 3, wobei die mehreren Reibeingriffselemente des Hauptgetriebemechanismus (2) ferner aufweisen: die zweite Bremse (B3) und eine zweite Freilaufkupplung (F2), die geeignet ist, im 2. Gang des Hauptgetriebemechanismus betätigt zu werden; und eine dritte Freilaufkupplung (F1), die geeignet ist, im 1. Gang des Hauptgetriebemechanismus betätigt zu werden, wobei das dritte Sonnenrad (S) mit dem integralen Gehäuse über die erste Bremse (B1) verbunden werden kann, wobei die zweite Freilaufkupplung (F2) zwischen das dritte Sonnenrad (S) und die erste Bremse (B1) eingefügt ist, und wobei das vierte Ringrad (R2) mit dem integralen Gehäuse (13) über die zweite Freilaufkupplung verbunden werden kann.

## Revendications

1. Transmission automatique comprenant :
a) coupleur hydraulique (21) et un mécanisme de transmission principal (2) disposé coaxialement l'un avec l'autre sur un premier arbre (3), ledit mécanisme de transmission principal étant adapté pour établir trois vitesses en marche avant et une vitesse en marche arrière et comprenant un train épicycloïdal (7/9) couplé audit coupleur hydraulique, et un ensemble de sortie (23/25) couplé audit au train épicycloïdal et disposé entre ledit train épicycloïdal et ledit coupleur hydraulique;
b) un mécanisme de transmission auxiliaire (5) disposé sur un deuxième arbre (6) parallèlement audit premier arbre, ledit mécanisme de transmission auxiliaire étant adapté pour établir trois vitesses en marche avant et comprenant un arbre de sortie (12) disposé sur ledit deuxième arbre, des premier et deuxième trains épicycloïdaux (10, 11) et une pluralité d'éléments agissant par frottement (C3, B4, F3, B5);
c) un boîtier (13₁) pour loger ledit coupleur hydraulique, une enveloppe (13) associée audit boîtier pour loger ledit mécanisme de transmission principal et ledit mécanisme de transmission auxiliaire, et un couvercle arrière (13₃) associé à ladite enveloppe pour former, conjointement avec ledit boîtier et ladite enveloppe, un carter monobloc.
d) ledit mécanisme de transmission principal et ledit mécanisme de transmission auxiliaire étant ainsi combinés de manière à établir cinq vitesses en marche avant et une vitesse en marche arrière,
e) la pluralité d'éléments agissant par frottement dudit mécanisme de transmission auxiliaire comprenant:
- un embrayage multidisque (C3) et un servomécanisme hydraulique pour ce dernier, adapté pour être actionné à la 3^{ème} vitesse dudit mécanisme de transmission auxiliaire;
- un frein à bande (B4) adapté pour être actionné à la 2^{ième} vitesse dudit mécanisme de transmission auxiliaire;
- un frein multidisque (B5) et un servomécanisme hydraulique pour ce dernier, adapté pour être actionné à la 1^{ère} vitesse dudit mécanisme de transmission auxiliaire;
f) ledit premier train épicycloïdal (10) comprenant:
- une première couronne dentée (R3) couplée audit ensemble de sortie (23/25) dudit mécanisme de transmission principal et agissant en tant qu'ensemble d'entrée dudit mécanisme de transmission auxiliaire;
- un premier porte-satellites (CR3) couplé audit arbre de sortie; et
- un premier pignon solaire (S3) pouvant être couplé audit premier porte-satellites par l'intermédiaire dudit embrayage multidisque et de son servomécanisme hydraulique,
g) ledit embrayage multidisque (C3) et son servomécanisme hydraulique étant disposés sur le côté dudit couvercle arrière dans la direction axiale dudit premier train épicycloïdal et pouvant être couplé audit carter monobloc par l'intermédiaire dudit frein à bande,
h) ledit frein à bande (B4) étant disposé autour de la circonférence extérieure dudit servomécanisme hydraulique destiné audit embrayage multidisque (C3),
- i) ledit deuxième train épicycloïdal (11) comprenant:
- une deuxième couronne dentée (R4) disposée sur le côté dudit couvercle arrière dans la direction axiale dudit embrayage multidisque (C3) et de son servomécanisme hydraulique et couplé audit arbre de sortie;
- un deuxième porte-satellites (CR4) pouvant être couplé audit carter monobloc par l'intermédiaire d'au moins un premier embrayage unidirectionnel (F3); et
- un deuxième pignon solaire (S4) couplé dudit premier pignon solaire (S3);
j) ledit frein multidisque (B5) et son servomécanisme hydraulique étant disposés sur le côté dudit couvercle arrière dans la direction axiale dudit deuxième train épicycloïdal, et
k) ledit couvercle arrière faisant partie dudit servomécanisme hydraulique destiné audit frein multidisque (B5).

2. Transmission automatique selon la revendication 1,
- ledit mécanisme de transmission principal comprenant: un arbre d'entrée (20) couplé audit coupleur hydraulique; ledit train épicycloïdal (7/9) comprenant un troisième train épicycloïdal, un train épicycloïdal double et une pluralité d'éléments agissant par frottement,
- la pluralité d'éléments agissant par frottement dudit mécanisme de transmission principal comprenant: un premier embrayage (C1) adapté pour être actionné à la 1^{ére} vitesse dudit mécanisme de transmission principal; un premier frein (B1) adapté pour être actionné à la 2^{éme} vitesse dudit mécanisme de transmission; un deuxième embrayage (C2) adapté pour être actionné à la 3^{éme} vitesse et à l'étage de marche arrière dudit mécanisme de transmission principal; et un deuxième frein (B3);
- ledit troisième train épicycloïdal comprenant: une troisième couronne dentée (R1) pouvant être couplée audit premier arbre (3) par l'intermédiaire dudit premier embrayage (C1); un troisième porte-satellites (CR) couplé audit ensemble de sortie (23, 25); et un troisième pignon solaire (S) pouvant être couplé audit premier arbre (3) par l'intermédiaire dudit deuxième embrayage (C2) et pouvant être couplé audit carter monobloc (13) par l'intermédiaire dudit premier frein (B1), et
- ledit train épicycloïdal double (9) comprenant: une quatrième couronne dentée (R2) pouvant être couplée audit carter monobloc (13) par l'intermédiaire dudit deuxième frein (B3); un quatrième porte-satellites faisant corps avec ledit troisième porte-satellites (CR) ; et une quatrième couronne dentée faisant corps avec ladite troisième couronne dentée (S).

3. Transmission automatique selon la revendication 1 ou 2, dans laquelle ledit premier embrayage unidirectionnel (F3) est adapté pour être actionné à la 1^{ére} vitesse dudit mécanisme de transmission auxiliaire (5), ledit premier embrayage unidirectionnel (F3) étant disposé entre ledit deuxième train épicycloïdal (11) et ledit servomécanisme hydraulique destiné audit frein multidisque (B5).

4. Transmission selon la revendication 2 ou 3, dans laquelle la pluralité d'éléments agissant par frottement que comporte ledit mécanisme de transmission principal (2) comprend, en outre: ledit deuxième frein (B3) et un deuxième embrayage unidirectionnel (F2) adapté pour être actionné à la 2^{éme} vitesse dudit mécanisme de transmission principal; et un troisième embrayage unidirectionnel (F1) adapté pour être actionné à la première vitesse dudit mécanisme de transmission, ladite troisième couronne dentée (S) pouvant être couplée audit carter monobloc par l'intermédiaire dudit premier frein (B1), ledit deuxième embrayage unidirectionnel (F2) étant interposé entre ledit troisième pignon solaire (S) et ledit premier frein (B1), et ladite quatrième couronne dentée (R2) pouvant être couplée audit carter monobloc (13) par l'intermédiaire du deuxième embrayage unidirectionnel.
